(19) Europäisches Patentamt
European Patent Office
Office européen des brevets

(11) **EP 2 088 396 A1**

(12) **DEMANDE DE BREVET EUROPEEN**

(43) Date de publication:
**12.08.2009  Bulletin 2009/33**

(51) Int Cl.:
***G01C 25/00*** *(2006.01)*    ***G01P 21/00*** *(2006.01)*

(21) Numéro de dépôt: **09152280.5**

(22) Date de dépôt: **06.02.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**
Etats d'extension désignés:
**AL BA RS**

(30) Priorité:  **08.02.2008   FR 0850793**

(71) Demandeur: **MBDA France
92358 Le Plessis Robinson Cedex (FR)**

(72) Inventeur: **Bourzier, Laurent
18000, BOURGES (FR)**

(74) Mandataire: **Joly, Jean-Jacques et al
Cabinet Beau de Loménie
158, rue de l'Université
75340 Paris cedex 07 (FR)**

(54)    **Procédé et système de validation d'une centrale inertielle d'un mobile**

(57)    Le procédé selon l'invention met en oeuvre une simulation de type hybride permettant de valider une centrale inertielle (3) d'un mobile embarquée sur un simulateur (2) de mouvements angulaires, en comparant une trajectoire du mobile calculée dans un environnement réel de navigation avec au moins une trajectoire de référence.

FIG.1

EP 2 088 396 A1

## Description

Arrière-plan de l'invention

La présente invention se rapporte au domaine général des appareils de navigation et plus particulièrement des centrales inertielles.

L'invention concerne plus particulièrement la validation d'une centrale inertielle d'un mobile embarquée sur un simulateur de mouvements.

De façon connue, une centrale inertielle est un appareil de navigation équipant un mobile (ex. un avion, une fusée) et comportant des instruments de mesure tels des gyroscopes, des gyromètres ou des accéléromètres. La centrale inertielle utilise les mesures réalisées par ces instruments pour délivrer au calculateur de bord du mobile des informations inertielles relatives, par exemple, à la vitesse angulaire et à l'accélération de ce mobile.

Le calculateur de bord du mobile réalise, à partir de ces informations inertielles, une estimation de la position spatiale du mobile et en fonction de celle-ci, délivre des ordres ou des commandes à des fonctions de pilotage du mobile (ex. gouvernes aérodynamiques, vannes, etc.) afin de diriger le mobile vers une destination désignée ou selon une trajectoire déterminée.

Si la centrale inertielle présente un défaut, le calculateur de bord estime la position spatiale du mobile à partir d'informations inertielles inexactes. Il fait donc des erreurs à chaque pas de calcul et envoie des commandes erronées aux fonctions de pilotage. Par conséquent, la vraie trajectoire du mobile sera très différente de la trajectoire estimée par le calculateur de bord. Ainsi, si la centrale inertielle présente un défaut grave, les commandes envoyées par le calculateur de bord seront tellement inappropriés que le mobile risque d'être déstabilisé.

Afin de contrôler et de valider la fonctionnalité des centrales inertielles, on fait souvent appel à des simulateurs de mouvements angulaires, mis en oeuvre dans des simulations hybrides. Ces simulations hybrides utilisent d'une part des sous-ensembles réels (par exemple une centrale inertielle, un simulateur de mouvements angulaires, le calculateur embarqué du mobile, certains éléments du mobile, etc.) et d'autre part, des modèles mathématiques d'autres sous-ensembles (par exemple pour la propulsion ou pour des éléments de l'environnement, tels qu'un modèle mathématique de l'atmosphère, de la Terre, etc.).

Les simulateurs de mouvements angulaires mis en oeuvre dans ces simulations hybrides permettent de reproduire les mouvements angulaires du mobile en termes de débattement, de vitesse et d'accélération mais ils ne permettent pas de reproduire des mouvements de translation. En conséquence, les informations issues des accéléromètres de la centrale inertielle fournies au calculateur de bord sont incomplètes car elles ne comportent aucune information concernant le déplacement linéaire du mobile.

Pour palier ce problème, il existe aujourd'hui deux stratégies de simulations hybrides qui diffèrent selon les informations accélérométriques prises en compte.

La première stratégie consiste à remplacer les informations provenant des accéléromètres de la centrale inertielle par des informations accélérométriques provenant d'un modèle mathématique. Selon cette première stratégie, les anomalies potentiellement présentes sur les informations accélérométriques délivrées par la centrale inertielle ne peuvent pas être détectées par la simulation hybride, puisque la contribution des accéléromètres de la centrale inertielle est absente.

La seconde stratégie consiste à compléter les informations provenant des accéléromètres de la centrale inertielle par des informations représentatives des mouvements de translation, calculées à l'aide d'un modèle mathématique. Cependant, selon cette seconde stratégie, les informations provenant des accéléromètres de la centrale inertielle sont mesurées en un point fixe correspondant aux coordonnées du laboratoire de simulation. Ces informations ne sont donc pas entièrement représentatives des informations que ces accéléromètres fourniraient, pour une même origine physique, au cours du déroulement de la trajectoire du mobile autour du globe terrestre. Par exemple, la pesanteur s'exerçant au point fixe du laboratoire est invariable, tandis que celle ressentie par les accéléromètres d'une centrale inertielle embarquée dans un mobile se déplaçant autour du globe terrestre est variable en fonction de l'altitude et de la latitude. Cette différence fausse ainsi la trajectographie du mobile obtenue en mettant en oeuvre la centrale inertielle au point fixe du laboratoire et rend difficile l'interprétation des résultats. De ce fait, cette seconde stratégie ne permet que de détecter un défaut grossier d'un ou des accéléromètres de la centrale inertielle.

De façon similaire, les informations issues des gyromètres de la centrale inertielle ne sont pas non plus entièrement représentatives de ce qu'elles seraient pour un déplacement du mobile autour du globe terrestre. En effet, la décomposition de la rotation terrestre sur les axes des gyromètres est différente selon que la centrale inertielle est située en un point de coordonnées fixes (cas de la simulation hybride en laboratoire) ou qu'elle est embarquée dans un mobile se déplaçant autour du globe terrestre. L'incidence de cette représentativité incomplète est telle qu'elle complique l'analyse des résultats obtenus en simulation hybride. Ainsi, on peut obtenir une trajectoire du mobile différente de celle attendue sans pour autant être sûr que cette différence n'est pas liée à la représentativité incomplète des informations gyrométriques. Il n'est donc pas possible d'affirmer de manière sûre et sans analyse plus complète si une centrale inertielle se trouve ou non dans des tolérances acceptables par rapport aux valeurs nominales indiquées par le constructeur de la centrale inertielle.

Objet et résumé de l'invention

La présente invention vise un procédé de validation d'une centrale inertielle d'un mobile, embarquée sur un simulateur de mouvements angulaires localisé en un point de coordonnées fixes du référentiel terrestre, cette validation étant mise en oeuvre en comparant une trajectoire du mobile calculée dans un environnement réel de navigation avec au moins une trajectoire de référence. Conformément à l'invention, pour obtenir la trajectoire calculée du mobile, le procédé de validation comporte une phase de pilotage dudit mobile comprenant une pluralité d'itérations, chacune des itérations comprenant :

- une étape d'obtention à l'aide d'un outil de simulation modélisant la centrale inertielle dans l'environnement réel de navigation et alimenté par des commandes de pilotage calculées à l'itération précédente :

  o d'un point de la trajectoire calculée du mobile ;
  o de données inertielles de simulation représentatives des données inertielles censées être fournies par la centrale inertielle dans l'environnement réel de navigation ; et
  o de commandes cinématiques représentatives d'un mouvement à exécuter par le simulateur de mouvements ;

- une étape de fourniture par la centrale inertielle de données inertielles de mesure représentatives du mouvement après exécution par le simulateur de mouvements ;
- une étape de modélisation théorique des données inertielles de mesure fournies par la centrale inertielle à partir de données cinématiques réellement exécutées par le simulateur de mouvement pour ledit mouvement, cette étape de modélisation théorique fournissant des données inertielles théoriques ;
- au moins une étape de compensation d'au moins une erreur susceptible de fausser la modélisation théorique des données inertielles de mesure par les données inertielles théoriques, cette étape de compensation étant mise en oeuvre avant l'étape de modélisation théorique ; et
- une étape de calcul de commandes de pilotage à partir des données inertielles de simulation, des données inertielles théoriques et des données inertielles de mesure.

Corrélativement, l'invention vise également un système de validation d'une centrale inertielle d'un mobile, embarquée sur un simulateur de mouvements angulaires localisé en un point de coordonnées fixes du référentiel terrestre, ce système comprenant pour valider la centrale inertielle des moyens de comparaison d'une trajectoire du mobile calculée dans un environnement réel de navigation avec au moins une trajectoire de référence. Conformément à l'invention, le système comporte en outre, pour obtenir la trajectoire calculée, des moyens pour mettre en oeuvre, au cours de chaque itération d'une phase de pilotage comprenant une pluralité d'itérations :

- un outil de simulation, modélisant la centrale inertielle dans l'environnement réel de navigation et alimenté par des commandes de pilotage calculées à l'itération précédente, cet outil de simulation comprenant des moyens pour obtenir :

  o un point de la trajectoire calculée du mobile ;
  o des données inertielles de simulation représentatives des données inertielles censées être fournies par la centrale inertielle dans l'environnement réel de navigation ; et
  o des commandes cinématiques représentatives d'un mouvement à exécuter par le simulateur de mouvements ;

- des moyens d'obtention de données inertielles de mesure fournies par la centrale inertielle et représentatives du mouvement après exécution par le simulateur de mouvements ;
- des moyens de modélisation théorique des données inertielles de mesure fournies par la centrale inertielle à partir de données cinématiques réellement exécutées par le simulateur de mouvement pour ledit mouvement, ces moyens de modélisation théorique fournissant des données inertielles théoriques ;
- des moyens de compensation d'au moins une erreur susceptible de fausser la modélisation théorique des données inertielles de mesure par les données inertielles théoriques, ces moyens de compensation étant mis en oeuvre en amont des moyens de modélisation théorique ; et
- des moyens de calcul de commandes de pilotage à partir des données inertielles de simulation, des données inertielles théoriques et des données inertielles de mesure.

De façon privilégiée mais non limitative, les données inertielles considérées dans l'invention comprennent des informations accélérométriques (ex. accélération) et des informations gyrométriques (ex. vitesses de rotation). Ces informations sont exprimées par exemple sous la forme de trois composantes correspondant aux axes X, Y, et Z du repère de la centrale inertielle.

De cette sorte, il est possible de détecter les défauts éventuels provenant notamment des accéléromètres de la centrale inertielle, dont les données inertielles de mesure accélérométriques sont issues.

Ces hypothèses ne sont cependant en aucun cas limitatives. En effet, l'invention s'applique également à des données inertielles comprenant des informations accélérométriques (ex. accélération) ou des informations gyrométriques, ainsi qu'à d'autres types de données inertielles, c'est-à-dire correspondant à des senseurs autres que des gyromètres et des accéléromètres. Par ailleurs, les données inertielles considérées peuvent être exprimées sous la forme d'un nombre différent de composantes (par exemple, on peut s'intéresser à une seule composante).

Par ailleurs, le procédé et le système de validation selon l'invention permettent d'élaborer une trajectoire pour le mobile très proche de la réalité et non entachée du problème lié aux mesures effectuées en un point fixe du laboratoire.

En effet, conformément à l'invention, on prend en compte pour calculer les commandes de pilotage et a fortiori la trajectoire du mobile, les informations inertielles provenant de la centrale inertielle à valider ainsi qu'un complément calculé par les moyens de modélisation théorique et l'outil de simulation du système de validation. Ainsi, les informations gyrométriques et accélérométriques utilisées pour calculer les commandes de pilotage et la trajectoire du mobile sont représentatives de celles que fournirait la centrale inertielle embarquée dans le mobile lors de sa trajectoire autour du globe terrestre.

Par ailleurs, du fait de la compensation d'erreurs susceptibles de fausser la modélisation théorique des données inertielles de mesure par les données inertielles théoriques, on s'assure que seuls des problèmes liés à la centrale inertielle seront détectés au cours de la validation de la centrale inertielle, les problèmes liés à une mauvaise représentativité des données inertielles de mesure par les données inertielles théoriques étant écartés.

De cette sorte, l'analyse de la trajectoire obtenue par rapport à la ou les trajectoires de référence est simplifiée : il n'est pas nécessaire de faire appel à un expert pour analyser les résultats. Il est ainsi possible de vérifier de façon simple et fiable si la centrale inertielle à valider possède des caractéristiques en accord avec les besoins. Un gain en termes de qualité de l'analyse et de coûts associés à l'exploitation des tests pour valider la centrale inertielle est ainsi obtenu.

Avantageusement, chaque itération du procédé de validation est mise en oeuvre en temps réel, à un rythme d'horloge conditionné par le rythme d'horloge du mobile. Corrélativement cela signifie que l'outil de simulation, la centrale inertielle, les moyens de modélisation théorique, les moyens de compensation et les moyens de calcul du système de validation selon l'invention fonctionnent en temps réel à un rythme d'horloge conditionné par le rythme d'horloge du mobile.

Dans un mode particulier de réalisation de l'invention, les commandes de pilotage sont calculées en fonction de données inertielles I définies par I=T2+R-T1 où T2, R et T1 désignent respectivement les données inertielles de simulation, les données inertielles de mesure et les données inertielles théoriques.

Ainsi, on peut utiliser un simulateur de mouvements sous-dimensionné pour des transitoires à forte dynamique angulaire de la trajectoire. En effet, en vertu du principe I=T2+R-T1, comme R et T1 dépendent de l'accomplissement effectué par le simulateur de mouvements, ils restent cohérents l'un par rapport à l'autre même si le simulateur de mouvements n'exécute pas correctement la commande. Ceci permet de dérouler une trajectoire précise du mobile à un moindre coût.

Selon un aspect de l'invention, ladite au moins une étape de compensation d'au moins une erreur comprend une calibration d'au moins une des commandes cinématiques afin de compenser des écarts angulaires existant entre des axes du simulateur de mouvements et les axes correspondant du référentiel terrestre.

Corrélativement, selon cet aspect, les moyens de compensation d'au moins une erreur du système de validation comprennent des moyens de calibration d'au moins une des commandes cinématiques afin de compenser des écarts angulaires existant entre des axes du simulateur de mouvements et les axes correspondant du référentiel terrestre.

Les erreurs de positionnement du simulateur de mouvements par rapport au référentiel terrestre (nord géographique, verticale du lieu) sont ainsi compensées. On évite ainsi de créer des écarts de trajectographie dus à un positionnement approximatif du simulateur de mouvements par rapport aux références terrestres, c'est-à-dire à une mauvaise représentativité des données inertielles de mesure par les données inertielles théoriques (i.e. différentiel entre les données inertielles de mesure et les données inertielles théoriques non négligeable).

Par ailleurs, en harmonisant également les axes de la centrale inertielle avec les axes du simulateur de mouvements, il est alors possible de positionner la centrale inertielle dans l'espace avec des valeurs de positions (commandes cinématiques) directement exprimées dans le référentiel terrestre. On obtient ainsi un positionnement conforme à ce qui est désiré et les données cinématiques réellement exécutées par le simulateur de mouvement peuvent être utilisées directement par le modèle théorique pour calculer l'image des données inertielles de mesure fournies par la centrale inertielle. On évite de cette sorte d'introduire des erreurs de positionnement angulaire dans les calculs des contributions terrestres implémentés dans le modèle théorique.

Enfin, la maîtrise des erreurs de positionnement du simulateur de mouvements par rapport au référentiel terrestre (écart angulaire entre les référentiels) permet d'assurer la répétitivité et la précision des tests effectués (en termes de positionnements de la centrale inertielle 3 notamment) et ainsi de garantir la fiabilité des résultats.

Selon un autre aspect de l'invention, ladite au moins une étape de compensation d'au moins une erreur comprend l'application d'une avance de phase sur au moins une des données cinématiques réellement exécutées par le simulateur de mouvements avant leur fourniture à l'étape de modélisation théorique, afin de synchroniser les données inertielles théoriques avec les données inertielles de mesure.

Corrélativement, selon cet autre aspect, les moyens de compensation d'au moins une erreur comprennent des moyens d'application d'une avance de phase sur au moins une des données cinématiques réellement exécutées par le simulateur de mouvements avant leur fourniture aux moyens de modélisation théorique, afin de synchroniser les données inertielles théoriques avec les données inertielles de mesure.

De cette sorte, les décalages temporels liés aux rythmes d'exécution des différents éléments du système de validation selon l'invention sont compensés, ce qui permet de garantir la synchronisation temporelle des données inertielles théoriques avec les données inertielles de mesure. Cette étape est donc d'autant plus importante lorsque les itérations du procédé de validation selon l'invention sont mises en oeuvre en temps réel.

On s'assure par ailleurs ainsi que les données inertielles de mesure et les données inertielles théoriques qui sont utilisées pour calculer les commandes de pilotage sont temporellement homogènes, et ce, à chaque itération du procédé de validation. De cette sorte on évite de générer des écarts de calcul à chaque itération, écarts qui, en se cumulant tout au long du calcul de la trajectoire du mobile, finissent par avoir une conséquence non négligeable sur la trajectographie (trajectoire) du mobile élaborée par le procédé et le système de validation, ce qui peut être particulièrement pénalisant pour l'interprétation de cette trajectographie.

Lorsque la centrale inertielle est considérée comme non valide à l'issue de la validation, le procédé de validation peut comporter en outre une étape de diagnostic mise en oeuvre en comparant des cumuls évalués à partir des données inertielles de mesure obtenues à chaque itération pour la trajectoire du mobile avec des cumuls évalués à partir des données inertielles théoriques obtenues à chaque itération pour la trajectoire du mobile.

Corrélativement, le système de validation peut comporter des moyens de diagnostic, lorsque ladite centrale inertielle est considérée comme non valide par ledit système de validation, adaptés à comparer des cumuls évalués à partir des données inertielles de mesure obtenues à chaque itération pour la trajectoire du mobile avec des cumuls évalués à partir de données inertielles théoriques obtenues à chaque itération pour la trajectoire du mobile.

Ainsi, en évaluant et en comparant ces cumuls pour chaque composante des informations inertielles (i.e. sur chaque axe de la centrale inertielle et ce, pour les informations gyrométrique et accélérométrique), il est possible de diagnostiquer quelle est ou quelles sont la ou les voies défectueuses de la centrale inertielle testée.

Dans un mode particulier de réalisation de l'invention, le procédé de validation comporte en outre au cours de chaque itération, une étape d'application d'une avance de phase sur les commandes cinématiques avant leur fourniture au simulateur de mouvements, pour compenser un retard d'exécution inhérent au simulateur de mouvements.

Corrélativement, dans ce mode particulier de réalisation de l'invention, le système de validation comporte en outre des moyens pour appliquer une avance de phase sur les commandes cinématiques avant leur fourniture audit simulateur de mouvements pour compenser un retard d'exécution inhérent au simulateur de mouvements.

Ainsi, on peut compenser les retards d'exécution du simulateur de mouvements ce qui permet aux données inertielles de mesure fournies par la centrale inertielle et aux données inertielles de simulation fournies par l'outil de simulation de rester en phase. Ceci permet de garantir non seulement la représentativité de mise en oeuvre de la centrale inertielle mais également d'éventuels autres senseurs (ex. auto-directeur) embarqués simultanément sur le simulateur de mouvements.

Avantageusement, les commandes cinématiques présentent un profil synchrone avec celui des données cinématiques réellement exécutées et les amplitudes des données cinématiques réellement exécutées et des commandes cinématiques sont cohérentes.

Ainsi, les commandes cinématiques sont en concordance avec les mouvements réellement exécutés par le simulateur de mouvements, ce qui permet d'obtenir une stimulation de la centrale inertielle en phase avec la cinématique du mobile fournie par l'outil de simulation. Ceci est très important notamment pour d'éventuels senseurs co-embarqués avec la centrale inertielle sur le simulateur de mouvements et pour lesquels un profil non synchrone occasionnerait des retards dans la chaîne d'asservissement, ce qui générerait des difficultés d'interprétation des résultats d'essais associés à ces autres senseurs.

Dans un mode particulier de réalisation de l'invention, le procédé de validation comporte en outre, à chaque itération, une étape de masquage après l'étape d'obtention et avant l'étape d'application d'une avance de phase sur les commandes cinématiques de sorte que l'étape de masquage est alimentée par les commandes cinématiques et fournit des commandes cinématiques masquées à l'étape d'application d'une avance de phase sur les commandes cinématiques pour masquer au moins une partie des phases dudit mouvement.

Corrélativement, le système de validation peut comporter en outre, en aval de l'outil de simulation et en amont des moyens d'application d'une avance de phase sur les commandes cinématiques, des moyens de masquage alimentés par les commandes cinématiques et adaptés à fournir des commandes cinématiques masquées aux moyens d'application d'une avance de phase sur les commandes cinématiques pour masquer au moins une partie des phases du mouvement.

Ainsi, on peut réaliser une trajectoire pour laquelle le débattement angulaire du mobile est supérieur à celui autorisé par le simulateur de mouvements.

Selon une particularité de l'invention, au moins une partie des commandes cinématiques masquées dépend d'une loi interne à l'étape de masquage qui est indépendante des commandes cinématiques.

Ceci permet de dérouler une trajectoire où le mobile peut réaliser plusieurs boucles ou circuits avec un simulateur de mouvements présentant un débattement angulaire limité.

Dans un mode particulier de réalisation de l'invention, le procédé de validation comporte en outre une phase d'initialisation comportant une pluralité d'itérations, chaque itération de la phase d'initialisation comprenant :

- une étape d'obtention à l'aide dudit outil de simulation :

  o d'un point de ladite trajectoire calculée dudit mobile ;
  o de données inertielles de simulation représentatives des données inertielles censées être fournies par ladite centrale inertielle dans ledit environnement réel de navigation ; et
  o de commandes cinématiques représentatives d'un mouvement à exécuter par ledit simulateur de mouvements ; - ainsi que les étapes de fourniture de données inertielles de mesure, de modélisation théorique, de compensation et de calcul de ladite phase de pilotage du procédé de validation telles que décrites précédemment.

Cette phase initiale correspond notamment à une phase pendant laquelle le mobile n'est pas piloté, notamment du fait que certaines conditions pour le pilotage du mobile, telles que par exemple une vitesse suffisante, ne sont pas remplies.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 illustre de manière schématique, un système de validation d'une centrale inertielle d'un mobile conforme à l'invention dans un premier mode particulier de réalisation ;
- la figure 2 représente schématiquement un exemple de table « 3 axes » d'un simulateur de mouvements embarquant une centrale inertielle ;
- la figure 3A représente, sous forme d'organigramme, les principales étapes mises en oeuvre à chaque itération d'une phase de pilotage du procédé de validation selon l'invention pour élaborer la trajectoire d'un mobile, lorsque ces étapes sont implémentées par le système de validation représenté sur la figure 1, dans un mode particulier de réalisation ;

- la figure 3B représente, sous forme d'organigramme, les principales étapes réalisées au cours des différentes itérations mises en oeuvre durant une phase d'initialisation pouvant précéder la phase de pilotage, dans un mode particulier de réalisation ;
- la figure 4 représente, sous forme d'organigramme, les principales étapes mises en oeuvre par le procédé de validation selon l'invention, pour valider ou non une centrale inertielle à partir de la trajectoire du mobile obtenue par le système de validation représenté sur la figure 1, dans un mode particulier de réalisation ;
- la figure 5 illustre de manière schématique, un système de validation d'une centrale inertielle d'un mobile dans un deuxième mode de réalisation de l'invention ;
- la figure 6 illustre de manière schématique, un système de validation d'une centrale inertielle d'un mobile dans un troisième mode de réalisation de l'invention ; et
- la figure 7 illustre de manière schématique un exemple de trajectoire d'un mobile.

Description détaillée de plusieurs modes de réalisation

Dans les différents modes de réalisation décrits ici, les données inertielles considérées (à savoir les données inertielles de mesure R, les données inertielles de simulation T2, les données inertielles théoriques T1 et les données inertielles I) comprennent des informations accélérométriques et des informations gyrométriques, exprimées respectivement sous la forme de trois composantes correspondant aux axes X, Y et Z de la centrale inertielle.

Ces hypothèses ne sont cependant en aucun cas limitatives. L'invention peut bien entendu également s'appliquer à des données inertielles ne comprenant que des informations accélérométriques ou que des informations gyrométriques, ou encore comprenant d'autres types de données inertielles correspondant à des senseurs autres que des gyromètres et des accéléromètres.

Par ailleurs, les données inertielles peuvent, dans une variante de réalisation, être exprimées sous la forme d'un nombre différent de composantes (par exemple, on peut s'intéresser à une seule composante).

Comme décrit précédemment, l'invention vise un procédé et un système de validation d'une centrale inertielle d'un mobile embarquée sur un simulateur de mouvements angulaires localisé en un point de coordonnées fixes du référentiel terrestre. Cette validation est réalisée en comparant une trajectoire de ce mobile calculée dans un environnement réel de navigation avec au moins une trajectoire de référence prédéterminée.

La trajectoire du mobile est calculée à l'aide d'une architecture de simulation hybride utilisant d'une part des sous-ensembles réels (ex. calculateur de bord du mobile, centrale inertielle du mobile, simulateur de mouvements angulaires) et d'autre part des modèles numériques du mobile (ex. propulsion, consommation de carburant, centrale inertielle) et de son environnement (ex. atmosphère, effets terrestres).

Dans les modes de réalisation décrits ici, cette trajectoire est composée de différents points, chaque point étant défini par un triplet (longitude, latitude, altitude) évalué dans le référentiel terrestre.

La simulation hybride mise en oeuvre dans l'invention par le système de validation pour calculer cette trajectoire, comporte au moins une phase dite de pilotage durant laquelle le mobile est piloté à l'aide de commandes de pilotage générées par son calculateur de bord. Une phase préliminaire à cette phase de pilotage, dite d'initialisation, et pendant laquelle le mobile peut se déplacer sans être piloté (car, par exemple, suite au tir du mobile, sa vitesse n'est pas suffisante), peut également être considérée en début de simulation comme décrit ultérieurement.

La phase de pilotage du procédé de validation selon l'invention comporte une pluralité d'itérations exécutées à l'aide de l'architecture de simulation hybride précitée, mise en oeuvre en temps réel et en boucle fermée. Chacune de ces itérations permet d'obtenir un point de la trajectoire calculée du mobile.

Premier mode de réalisation de l'invention

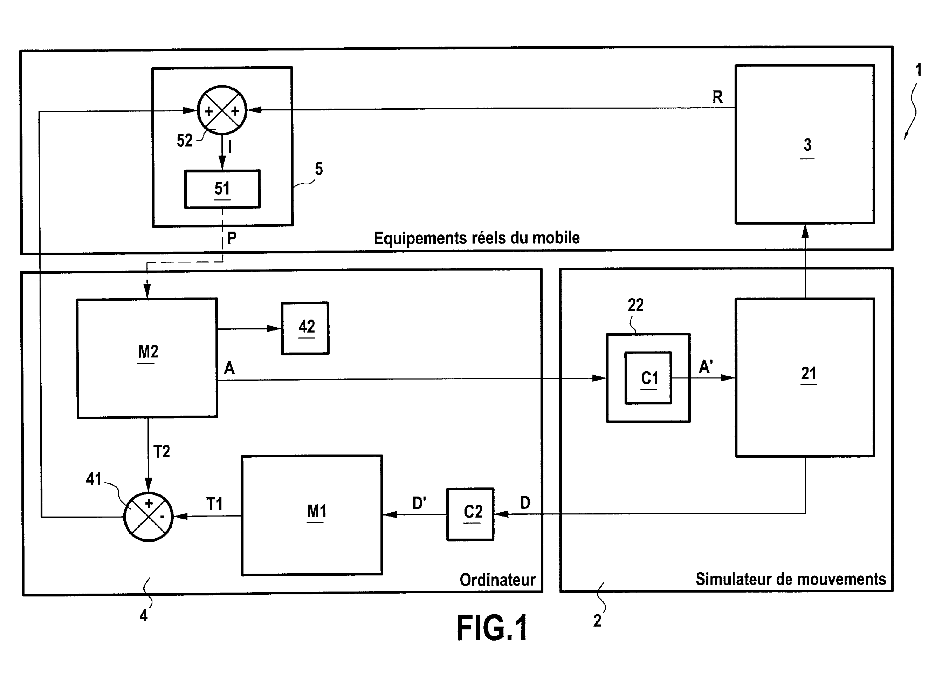

La figure 1 représente de manière schématique, dans un premier mode particulier de réalisation, un système de validation 1 conforme à l'invention et mettant en oeuvre cette architecture de simulation hybride.

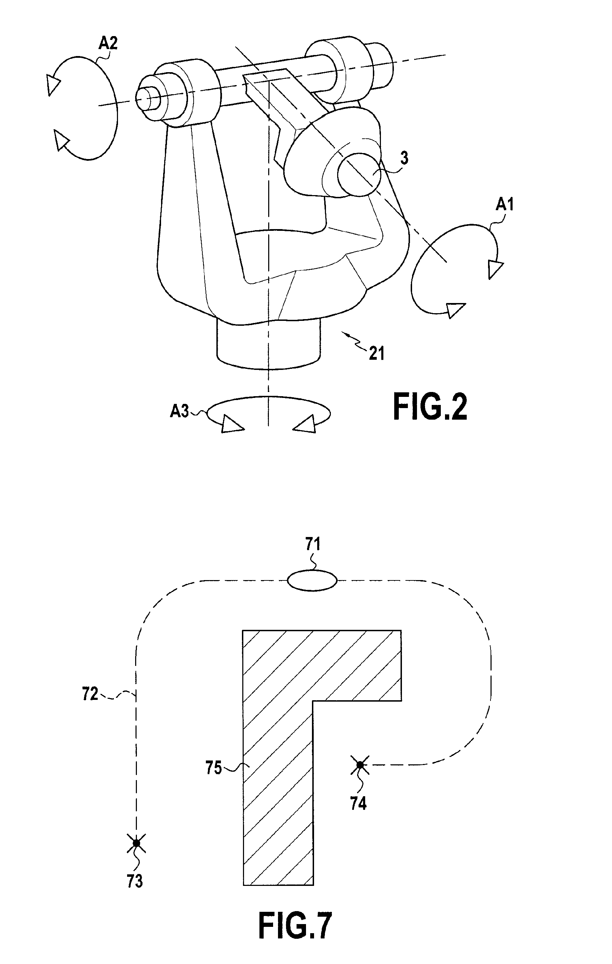

Le système de validation 1 comporte un simulateur de mouvements angulaire 2, comprenant une table « 3 axes » 21, commandée à l'aide d'un boîtier de commande numérique 22 et adaptée à recevoir une centrale inertielle réelle 3 d'un mobile à valider. Un exemple d'une table « 3 axes » pouvant accueillir la centrale inertielle 3 est représenté sur la figure 2. Une telle table est connue de l'homme du métier et ne sera pas décrite plus en détails ici.

En variante, le simulateur de mouvements angulaires peut comporter d'autres types de tables, tel que par exemple une table « 5 axes ».

Le simulateur de mouvements angulaires 2 peut réaliser des déplacements angulaires autour d'un axe de roulis A1, d'un axe de tangage A2 et d'un axe de lacet A3, et ainsi appliquer sur la centrale inertielle 3 des mouvements angulaires selon les axes A1, A2 et A3. Plus précisément, ces mouvements angulaires sont appliquées par la table 21 sur la centrale inertielle 3 en fonction de commandes cinématiques numériques A' reçues du boîtier de commande 22. Ces commandes cinématiques A'comportent:

- une position angulaire,
- une vitesse angulaire, et
- une accélération angulaire, chacune étant exprimée sous la forme de trois composantes correspondant respectivement aux différents axes du simulateur de mouvements 2 (roulis, tangage et lacet).

Dans l'exemple décrit ici, le boîtier de commande numérique 22 possède un écran (non représenté sur la figure) sur lequel il est possible de visualiser les commandes numériques appliquées sur la centrale inertielle 3 par la table « 3 axes » 21 du simulateur de mouvements 2.

La centrale inertielle 3 comporte des outils de mesure tels que des gyromètres (ou des gyroscopes) et des accéléromètres (non représentés sur la figure) lui permettant de fournir des données inertielles de mesure R (informations gyrométriques et accélérométriques de mesure) en réponse au mouvement appliqué par le simulateur de mouvements 2 et correspondant à la commande cinématique A'.

On notera que la centrale inertielle 3 peut être embarquée seule sur le simulateur de mouvements 2 ou comprise dans le mobile (non représenté sur la figure 1) ou dans au moins une partie du mobile.

Le simulateur de mouvements angulaires 2 est par ailleurs relié à au moins un dispositif informatique ou ordinateur 4, utilisé pour mettre en oeuvre notamment les éléments de modélisation numérique de l'architecture de simulation hybride, à savoir ici un modèle théorique M1 et un outil de simulation (ou simulateur) M2.

Le modèle théorique M1 est adapté à fournir une image théorique T1 (données inertielles théoriques au sens de l'invention) des données inertielles mesurées par la centrale inertielle 3 embarquée sur le simulateur de mouvements 2 (c'est-à-dire au point de coordonnées fixes du laboratoire auquel se trouve le simulateur de mouvements 2). Autrement dit, les données inertielles théoriques fournies par le modèle théorique M1 représentent les données inertielles que mesurerait la centrale inertielle 3 au point de coordonnées fixes si elle était parfaite.

Pour calculer l'image théorique T1, le modèle théorique M1 s'appuie sur des modèles mathématiques des phénomènes physiques s'exerçant sur la centrale inertielle 3 (expressions théoriques modélisant les effets terrestres tels que la rotation terrestre ou la pesanteur locale) ainsi que des effets liés au mouvement angulaire exécuté par le simulateur de mouvements 2. Il utilise notamment des données cinématiques D' traduisant les positions, vitesses et accélérations angulaires appliquées à la centrale inertielle 3 par le simulateur de mouvements 2.

L'outil de simulation M2 modélise la centrale inertielle 3 dans un environnement réel de navigation, c'est-à-dire dans un environnement de navigation autour du globe terrestre, prenant en compte les effets terrestres locaux sur la centrale inertielle (ex. pesanteur locale, vitesse de rotation terrestre). Un tel outil de simulation s'appuie, de façon connue, sur des modèles mathématiques des éléments constituant le mobile (comme notamment un modèle de mécanique du vol et un modèle de centrale inertielle présentant des caractéristiques au nominal (milieu de tolérance) du cahier des charges de la centrale inertielle 3) et de son environnement.

Dans l'exemple décrit ici, durant la phase de pilotage, l'outil de simulation M2 calcule, à partir de commandes de pilotage P :

- un point X de trajectoire du mobile dans l'environnement réel de navigation,
- des données inertielles de simulation T2, représentatives des données inertielles que serait censée fournir la centrale inertielle 3 dans un tel environnement pour ce point de trajectoire, et
- des commandes cinématiques A, fournies au simulateur de mouvements 2 et représentant le mouvement à appliquer sur la centrale inertielle 3 correspondant à ce point de trajectoire.

Le modèle théorique M1 et l'outil de simulation M2 se présentent sous la forme de logiciels mémorisés par exemple dans la mémoire morte de l'ordinateur 4 ou dans une mémoire persistante de l'ordinateur 4.

Le système de validation 1 comporte en outre un calculateur 5 de bord du mobile, relié d'une part à la centrale inertielle 3 et d'autre part à l'ordinateur 4. Le calculateur de bord 5 est en charge notamment du pilotage et du guidage du mobile à partir de données inertielles I. Il est doté d'un module « pilote » 51, destiné à élaborer des ordres de braquage (ou commandes de pilotage) des fonctions de pilotage du mobile, compatibles avec les caractéristiques du mobile (ex. ordres de braquage des gouvernes aérodynamiques, commande d'ouverture de vannes, etc.). Le module « pilote » 51 est une fonction automatique jugeant en temps réel, grâce aux données inertielles I, de l'accomplissement de l'ordre commandé précédemment et adaptant au besoin le niveau de l'ordre de commande à venir, en fonction d'une trajectoire de consigne.

De façon générale, un calculateur de bord d'un mobile génère des commandes de pilotage à partir de données inertielles issues des gyromètres et des accéléromètres de la centrale inertielle du mobile. Dans le système de validation 1 selon l'invention, les données inertielles I utilisées par le calculateur de bord 5 pour déterminer les commandes de pilotage P dépendent des données inertielles de mesure R, des données inertielles de simulation T2 et des données inertielles théoriques T1, comme expliqué plus en détails ultérieurement.

On notera que les différentes liaisons entre l'ordinateur 4, le simulateur de mouvements 2, le calculateur 5 de bord et la centrale inertielle 3 peuvent être réalisées via des câbles électriques ou optiques, par radio ou par d'autres moyens.

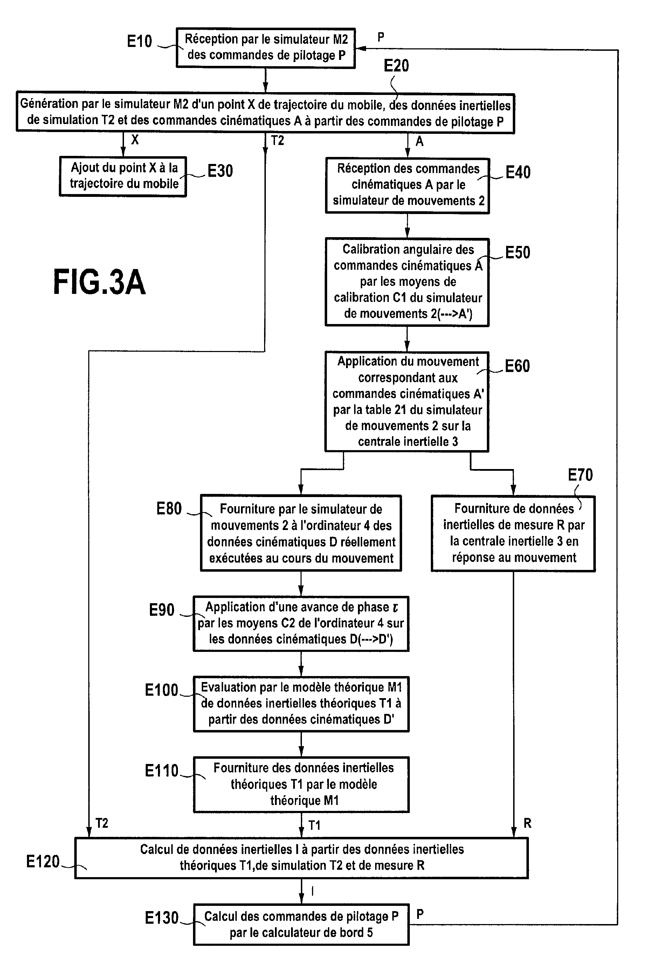

Nous allons maintenant décrire, en référence à la **figure 3A**, les principales étapes mises en oeuvre à chaque itération de la phase de pilotage du procédé de validation selon l'invention par le système de validation 1 pour évaluer un point de la trajectoire du mobile associé à la centrale inertielle 3.

*Déroulement d'une itération de la phase de pilotage*

Comme décrit précédemment, chaque itération *i* de la phase de pilotage du procédé de validation selon l'invention est implémentée par les différentes entités du système de validation 1 en temps réel, à un rythme d'horloge conditionné par le rythme d'horloge du mobile. Plus précisément, à chaque itération, les calculs et les échanges de données entre le calculateur de bord 5 du mobile, le simulateur M2, le modèle théorique M1, le simulateur de mouvements angulaires 2, la centrale inertielle 3 sont effectués à la fréquence réelle cadençant les opérations réalisées par le mobile et avantageusement dans un délai inférieur à la période correspondant à cette fréquence.

Au cours d'une itération *i,* sur réception de commandes de pilotage P générées par le calculateur de bord 5 à l'itération *i-1,* à partir de données inertielles I (étape E10), l'outil de simulation numérique M2 génère un point X de la trajectoire du mobile dans l'environnement réel de navigation (étape E20). A cette fin, l'outil de simulation M2 utilise un modèle de mécanique du vol qui lui permet de calculer, en réponse aux commandes de pilotage P et dans l'environnement réel de navigation, la position réelle du mobile, à savoir sa longitude, sa latitude et son altitude (i.e. point de la trajectoire). Ce point de trajectoire X vient alors incrémenter la trajectoire du mobile élaborée par le procédé de validation selon l'invention à chaque itération de la phase de pilotage (étape E30).

Le simulateur M2 fournit également, en temps réel, au cours de l'étape E20 :

- les données inertielles de simulation T2 représentatives des données inertielles censées être mesurées par la centrale inertielle 3, pour le nouveau point X de trajectoire calculé, dans l'environnement réel de navigation, c'est-à-dire lors du déplacement du mobile autour du globe terrestre ; et
- des commandes cinématiques numériques A, indiquant le mouvement à exécuter par le simulateur de mouvements 2 en réponse aux commandes de pilotage P (mouvement que devrait accomplir le mobile pour atteindre le nouveau point de trajectoire X). Ces commandes cinématiques A sont calculées à l'aide notamment du modèle de mécanique du vol, et comprennent ici les positions angulaires, vitesses angulaires et accélérations angulaires à appliquer sur les axes du simulateur de mouvements 2. En variante, les commandes cinématiques A fournies par l'outil de simulation numérique M2 ne comprennent pas nécessairement toutes ces valeurs. Elles peuvent par exemple ne comprendre que des positions angulaires, ou des positions angulaires et des vitesses angulaires. Dans cette variante de réalisation, les commandes cinématiques seront complétées ultérieurement par le boîtier numérique de commande 22, à l'aide de techniques connues de l'homme du métier (ex. dérivation des vitesses angulaires pour obtenir les accélérations angulaires) de sorte à intégrer, au moment de leur application par la table « 3 axes » 21, des positions, des vitesses et des accélérations angulaires pour chaque axe du simulateur de mouvements 2.

Les commandes cinématiques A sont alors transmises par l'outil de simulation M2 au simulateur de mouvements 2.

Sur réception des commandes cinématiques A par le simulateur de mouvements 2 (étape E40), une calibration d'au moins une partie des commandes cinématiques A est mise en oeuvre par le boîtier de commande numérique 22 (étape E50). Cette calibration a pour but de compenser les écarts (ou biais) angulaires $\alpha R$, $\alpha T$ et $\alpha L$ existant entre les axes du simulateur de mouvements 2 (respectivement axe de roulis, axe de tangage et axe de lacet) et les axes correspondant du référentiel terrestre.

Pour mettre en oeuvre cette calibration, le boîtier de commande numérique 22 comporte des moyens de compensation C1 adaptés à introduire les valeurs des écarts angulaires $\alpha R$, $\alpha T$ et $\alpha L$ dans une partie des commandes cinématiques A. De façon plus précise, les valeurs $\alpha R$, $\alpha T$ et $\alpha L$ sont soustraites par les moyens de calibration C1 aux composantes correspondantes de la position angulaire comprise dans les commandes cinématiques A. De cette sorte, les positions angulaires exécutées sur les différents axes du simulateur de mouvements 2 sont représentatives des écarts angulaires existant entre les axes du simulateur de mouvements 2 et les références terrestres correspondantes (i.e., nord géographique et axe de lacet du simulateur de mouvements, verticale du lieu et axe de tangage du simulateur de mouvements, verticale du lieu et axe de roulis du simulateur de mouvements).

Les écarts angulaires $\alpha R$, $\alpha T$ et $\alpha L$ auront été préférentiellement évalués au cours d'une phase de paramétrage, préliminaire au procédé de validation selon l'invention, et qui sera décrite ultérieurement.

Les commandes cinématiques A' obtenues après calibration angulaire des commandes cinématiques A sont ainsi directement exprimées dans le référentiel terrestre. Ces commandes A' sont fournies par le boîtier de commande numérique 22 à la table 3 axes 21 du simulateur de mouvements 2 afin que celle-ci applique sur la centrale inertielle 3 le mouvement correspondant (étape E60).

En réponse au mouvement appliqué par le simulateur de mouvements 2, la centrale inertielle 3 fournit des données inertielles de mesure R (étape E70). Comme mentionné précédemment, ces données inertielles de mesure R sont issues des gyromètres et des accéléromètres de la centrale inertielle 3.

Par ailleurs, simultanément, les données cinématiques D réellement exécutées par le simulateur de mouvements 2 sur la centrale inertielle 3 sont transmises par le simulateur de mouvements 2 à l'ordinateur 4 (étape E80), en vue d'être fournies au modèle théorique M1. Ces données cinématiques D ont été mesurées par des capteurs angulaires notamment, localisés sur le simulateur de mouvements 2.

Avant d'être fournies au modèle théorique M1, les données cinématiques D sont traitées par des moyens C2 de l'ordinateur 4, afin de leur appliquer une avance de phase $\tau$ (étape E90). Cette avance de phase $\tau$ vise à garantir une homogénéité temporelle entre les données inertielles théoriques T1 générées par le modèle théorique M1 et les données inertielles de mesure R fournies par la centrale inertielle 3, et ce à chaque itération du procédé de validation.

Dans l'exemple décrit ici, cette avance de phase est appliquée, à l'aide d'un algorithme approprié, par les moyens C2 sur les différentes composantes de la position angulaire et de la vitesse angulaire comprises dans les données cinématiques D, et ce de façon indépendante pour chaque composante. Cet algorithme utilise notamment les valeurs des composantes des position et vitesse angulaires comprises dans les données cinématiques D à l'itération courante $i$ et aux N itérations précédentes (par exemple aux itérations $i-1$ et $i-2$), ainsi que des coefficients d'augmentation moyenne de ces positions ou vitesses angulaires entre les itérations (par exemple entre les itérations $i$ et $i-2$). Un tel algorithme est connu de l'homme du métier et ne sera pas décrit plus en détails ici.

En variante, dans un autre exemple de réalisation, il est possible d'appliquer l'avance de phase $\tau$ également sur l'accélération.

L'avance de phase $\tau$ appliquée par les moyens C2 aura été avantageusement déterminée au cours de la phase de paramétrage préliminaire au procédé de validation, comme décrit ultérieurement.

Les données cinématiques D' obtenues en sortie des moyens C2 sont ensuite fournies au modèle théorique M1, qui évalue, à partir de ces données cinématiques, les données inertielles théoriques T1 (étape E100).

Comme décrit précédemment, pour générer ces données inertielles théoriques T1, le modèle théorique M1 comporte un modèle mathématique modélisant les phénomènes physiques s'exerçant sur une centrale inertielle parfaite localisée en un point de coordonnées fixes correspondant au laboratoire.

Dans l'exemple décrit ici, le modèle mathématique utilisé par le modèle théorique M1 s'appuie sur les équations suivantes pour évaluer les données inertielles gyrométriques théoriques $G_1$ et les données inertielles accélérométriques théoriques $A_1$ appliquées aux axes des senseurs théoriques et comprises dans les données inertielles théoriques T1 :

$$G_1 = \Omega_T + \omega$$

et

$$A_1 = \Gamma_R + 2 \times \Omega_T \wedge V_R - g \, ,$$

où :

- $\Omega_T$ désigne l'expression de la vitesse de rotation instantanée de la Terre dans le repère de la centrale inertielle ;
- $\omega$ désigne l'expression de la vitesse de rotation exécutée par le simulateur de mouvements 2, issues des données cinématiques fournies par le simulateur de mouvements 2, dans le repère de la centrale inertielle ;
- $\Gamma_R$ désigne l'accélération relative à la Terre théoriquement appliquée au repère de la centrale inertielle ;
- $V_R$ désigne la vitesse relative à la Terre théoriquement appliquée au repère de la centrale inertielle ;
- g désigne la pesanteur locale exprimée dans le repère de la centrale inertielle ;
  les quantités $G_1$, $A_1$, $\Omega_T$, $\omega$, $\Gamma_R$, $V_R$ et g désignant des vecteurs.

Les données inertielles théoriques T1 sont censées être représentatives des données inertielles mesurées par la centrale inertielle 3 embarquée sur le simulateur de mouvements 2, c'est-à-dire des données inertielles mesurées en un point de coordonnées fixes du laboratoire. Grâce à l'application d'une avance de phase $\tau$ par les moyens C2, les données inertielles théoriques T1 fournies par le modèle théorique T1 (étape E110) et les données inertielles de mesure R fournies par la centrale inertielle (étape E70) sont synchrones.

Les moyens de compensation angulaire C1 et les moyens d'application d'une avance de phase C2 représentent ainsi, au sens de l'invention, des moyens de compensation d'erreurs susceptibles de fausser la modélisation théorique des données inertielles de mesure R par les données inertielles théoriques T1. Ces moyens de compensation sont avantageusement mis en oeuvre en amont du modèle théorique M1, afin de garantir une bonne représentativité des données inertielles de mesure R par les données inertielles théoriques T1.

Les données inertielles de mesure R (fournies par la centrale inertielle 3), les données inertielles théoriques T1 (fournies par le modèle théorique M1) et les données inertielles de simulation T2 (fournies par le simulateur M2) générées à l'itération $i$ sont ensuite utilisées pour évaluer les données inertielles I (étape E120) définies par :

$$I = R + T2 - T1.$$

Pour cela, on utilise des moyens d'opérations arithmétiques 41 et 52, connus de l'homme du métier, et localisés respectivement dans l'exemple décrit ici, dans l'ordinateur 4 et dans le calculateur de bord 5, comme représenté sur la figure 1. Ainsi, les moyens d'opérations arithmétiques 41 évaluent dans un premier temps la différence T2-T1, puis les moyens d'opérations arithmétiques 52 ajoutent dans un second temps le résultat de cette différence aux données inertielles R.

En variante, les moyens 41 et 52 peuvent être colocalisés, dans l'ordinateur 4 ou dans le calculateur de bord 5 ou dans un autre dispositif non représenté sur la figure 1 (ex. un autre ordinateur). Par ailleurs, d'autres opérations peuvent être effectuées, à condition de mener au calcul de I tel que défini supra.

En calculant l'expression théorique T1 des mesures qu'est censée avoir réalisées la centrale inertielle 3 au point fixe, en retranchant T1 à R et en ajoutant la contribution des données inertielles de simulation T2 (représentatives des mesures effectuées par la centrale inertielle embarquée dans le mobile se déplaçant autour du globe terrestre), on obtient une trajectographie représentative de la réalité. On notera qu'en retranchant T1 à R, on enlève la contribution apportée par la centrale inertielle 3 à un $\eta$ près ($\eta = |R - T1|$), où la valeur de $\eta$ est d'autant plus grande que la centrale inertielle 3 est imparfaite.

Les commandes de pilotage P sont ensuite calculées en fonction de ces données inertielles I par le calculateur de bord 5 (étape E130), à partir de la trajectoire de consigne comme décrit précédemment.

Ces commandes de pilotage P sont alors fournies au simulateur M2 au cours de l'itération $i+1$, puis les étapes E10 à E130 sont reprises à chaque itération de la phase de pilotage, de sorte à élaborer la trajectoire du mobile.

Les itérations stoppent lorsque la trajectoire de consigne a été entièrement déroulée. On obtient alors une trajectoire calculée du mobile élaborée par le système de validation 1 (à partir notamment des points X de trajectoire générés par l'outil de simulation M2 à chaque itération de la phase de pilotage).

Cette trajectoire du mobile ainsi obtenue est alors comparée par des moyens de validation 42 de l'ordinateur 4 avec au moins une trajectoire de référence prédéterminée pour valider la centrale inertielle 3. Cette phase de validation peut être effectuée en temps différé, à la fin des itérations ou ultérieurement.

En variante, elle peut être réalisée par des moyens de validation compris dans un autre dispositif que l'ordinateur 4, par exemple un autre ordinateur.

*Phase de validation*

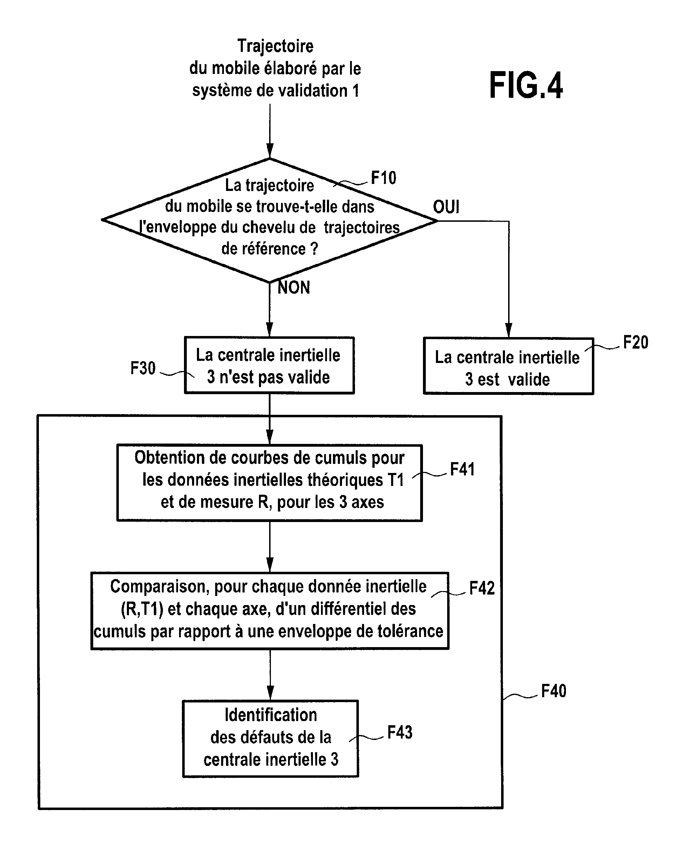

Nous allons maintenant décrire, en référence à la **figure 4,** la phase de validation de la centrale inertielle 3, mise en oeuvre par les moyens de validation informatiques 42 de l'ordinateur 4.

Dans l'exemple décrit ici, la trajectoire du mobile calculée par le système de validation 1 est comparée à un chevelu de trajectoires de référence. De façon plus précise, on détermine au cours de l'étape de validation F10, si la trajectoire élaborée par le système de validation 1 est contenue dans l'enveloppe du chevelu de trajectoires de référence.

Ce chevelu de trajectoires de référence aura été préférentiellement évalué au cours de la phase de paramétrage préliminaire au procédé de validation selon l'invention, comme décrit ultérieurement.

En variante, il est possible de comparer la trajectoire élaborée par le système de validation 1 à une trajectoire de référence, plutôt qu'un chevelu de trajectoires de référence.

Par ailleurs, au cours de cette étape de validation F10, la comparaison entre la trajectoire calculée du mobile et la ou les trajectoires de référence peut être réalisée sur une ou plusieurs parties des trajectoires, en fonction par exemple des défauts de la centrale inertielle que l'on souhaite détecter.

Si au cours de l'étape de validation F10, on détermine que la trajectoire du mobile élaborée par le système de validation 1 est comprise dans l'enveloppe du chevelu de trajectoires de référence, alors la centrale inertielle 3 est considérée comme valide (étape F20). Cela signifie que la centrale inertielle 3 a des performances se trouvant dans des bornes acceptables par rapport à celles d'une centrale inertielle parfaite et correspond aux besoins pour lesquels elle a été élaborée. Dans ce cas, il se peut que la centrale inertielle 3 possède des caractéristiques non nominales, mais ces caractéristiques restent à l'intérieur des bornes ou tolérances spécifiées dans son cahier de charge.

Sinon, elle est considérée comme non valide (étape F30), c'est-à-dire qu'elle présente des défauts importants. En effet, le mobile n'atteint pas l'objectif fixé par la trajectoire de consigne, alors que le calculateur de bord 5 croit l'avoir atteint (trajectoire estimée par le calculateur de bord par rapport à la trajectoire de consigne).

Dans ce cas, les moyens de validation 42 peuvent avantageusement mettre en oeuvre une étape de diagnostic (étape F40), afin d'identifier la ou les voies défaillantes de la centrale inertielle 3, c'est-à-dire identifier d'une part si la centrale inertielle 3 comporte un défaut au niveau des mesures accélérométriques et/ou gyrométriques, et d'autre part, identifier sur quel(s) axe(s) (X et/ou Y et/ou Z) se trouvent ce ou ces défauts.

Afin de permettre cette étape de diagnostic, on aura mémorisé, à chaque itération *i* mise en oeuvre pour générer la trajectoire du mobile, les valeurs des données inertielles théoriques T1 et les données inertielles de mesure R.

On évalue à partir des valeurs mémorisées de R et de T1, pour chaque itération *i* de la phase de pilotage et pour chacune des composantes des données inertielles (à savoir, gyrométriques et accélérométriques, et sur les différents axes) un cumul de ces valeurs de l'itération 1 à l'itération *1* (étape F41). Ainsi, dans l'hypothèse de données gyrométrique et accélérométrique représentées chacune sur trois axes, on génère, pour chaque itération, douze cumuls différents, soit :

- 6 cumuls pour les données inertielles de mesure R ; et
- 6 cumuls pour les données inertielles théoriques T1.

On obtient ainsi, pour chaque donnée inertielle (gyrométrique et accélérométrique) et pour chaque axe, une courbe de cumuls sur l'ensemble des itérations (étape F41).

En comparant (étape F42), pour chaque donnée inertielle et pour chaque axe, le différentiel des courbes de cumuls obtenues pour T1 et pour R par rapport à une enveloppe dite de tolérance, il est alors possible d'identifier quelles sont la ou les données inertielles défaillantes et la ou les voies de mesure défaillantes de la centrale inertielle 3.

En effet, si pour une donnée inertielle et un axe particuliers, on obtient un différentiel entre les courbes de cumuls obtenues pour T1 et pour R pour cette donnée inertielle et cet axe particuliers en dehors de l'enveloppe de tolérance, alors on considère que cet axe particulier pour cette donnée inertielle particulière de la centrale inertielle 3 est défaillant (étape F43).

Une enveloppe de tolérance différente peut être considérée pour chaque axe et/ou chaque donnée inertielle.

Comme pour l'étape de validation, le diagnostic pourra être mis en oeuvre sur tout ou partie des données inertielles de mesure et des données inertielles théoriques, i.e., les cumuls évalués pourront porter uniquement sur certaines composantes ou sur une fenêtre limitée d'itérations.

*Phase de paramétrage*

Comme décrit précédemment, au cours de la phase de paramétrage, plusieurs paramètres utilisés au cours du procédé de validation sont évalués, dont notamment :

- les biais angulaires $\alpha R$, $\tau T$ et $\alpha L$ appliqués par les moyens de compensation C1 au cours de l'étape E50 pour compenser les écarts angulaires existant entre les axes du simulateur de mouvements 2 et les axes correspondant du référentiel terrestre ;
- l'avance de phase $\tau$ appliquée par les moyens C2 de l'ordinateur 4 ; et
- le chevelu de trajectoires de référence utilisées au cours de la phase de validation de la centrale inertielle 3.

Cette phase de paramétrage a lieu en amont du procédé de validation selon l'invention.

Pour évaluer les biais angulaires αR, αT et αL, les opérations successives suivantes sont mises en oeuvre au cours la phase de paramétrage :

(1) On réalise tout d'abord une référence mécanique Réf1 sur la table « 3 axes » 21. A l'aide de cette référence mécanique Réf1, un outillage O1 dédié à l'identification des écarts angulaires αR, αT et αL est positionné de façon précise, connue et répétitive sur la table « 3 axes » 21. Cet outillage O1 comporte deux niveaux de précision, harmonisés par rapport à la référence Réf1 de par la conception de l'outillage O1 Ces deux niveaux sont destinés pour l'un à l'identification de l'écart angulaire αR (biais en roulis) et pour l'autre à l'identification de l'écart angulaire αT (biais en tangage). L'outillage O1 possède par ailleurs une autre référence Réf2, utilisée pour effectuer une visée afin d'identifier l'écart angulaire αL (biais en lacet).

(2) A partir de la position canonique de la table « 3 axes » 21 (i.e. position que rallie naturellement la table « 3 axes » 21 lorsqu'elle est mise en oeuvre sans commande numérique particulière), on compense à l'aide du boîtier de commande numérique 22 et par approximations successives, les biais angulaires détectés par les deux niveaux de précision jusqu'à obtenir simultanément pour les deux niveaux de précision, une mesure la plus proche possible de l'horizontale. On obtient ainsi, par lecture directe sur l'écran du boîtier de commande numérique 22 de la table « 3 axes » 21, les valeurs des biais en roulis αR et en tangage αT.

(3) Pour identifier la valeur du biais en lacet αL, on peut utiliser un chercheur de nord couplé à un théodolite. Une fois le nord géographique trouvé à l'aide du chercheur de nord, une visée est effectuée avec le théodolite sur la référence Réf2 de l'outillage O1. Ensuite, par approximations successives, on aligne la visée du théodolite sur la référence Réf2, à l'aide d'une part du boîtier de commande numérique 22 et d'autre part du théodolite. Lorsque l'alignement semble être atteint (ou tout du moins pour le meilleur alignement ainsi réalisé), on obtient la valeur du biais en lacet αL en sommant le biais introduit dans les commandes numériques de la table 21 sur l'axe de lacet (et dont la valeur peut être lue sur l'écran du boitier de commande numérique 22) et le biais introduit pour déplacer la visée du théodolite depuis la position caractérisant le nord géographique jusqu'à la position correspondant au meilleur alignement de la visée sur la référence Réf2.

En outre, au cours des itérations, on utilise également un second outillage 02, indexé à l'aide de la référence Réf1, afin de placer de façon connue, précise et répétitive la centrale inertielle 3 à valider par rapport aux axes du simulateur de mouvements 2.

Grâce à ces différentes opérations et en appliquant au cours de l'étape E50 les écarts angulaires αR, αT et αL sur les commandes numériques A, on s'assure que les axes du simulateur de mouvements 2 sont bien harmonisés avec les axes du référentiel terrestre (verticale du lieu, nord géographique) et que la position des axes de référence de la centrale inertielle 3 est connue avec précision. La référence Réf1, la conception de l'outillage 02 et les performances intrinsèques de positionnement du simulateur de mouvements garantissent la répétitivité des positionnements dans l'espace.

Pour estimer l'avance de phase τ à appliquer par les moyens de compensation C2, on considère les temps d'exécution nécessaires pour obtenir d'une part les données inertielles de mesure R et d'autre part les données inertielles théoriques M1. Ainsi, par exemple, dans l'hypothèse où :

- les entrées/sorties de données, dans chaque entité du système de validation 1, sont réalisées une seule fois par période d'horloge (notée Te) ;
- les étapes E80 de fourniture par le simulateur de mouvements des données cinématiques D et E70 de fourniture des données inertielles de mesure R par la centrale inertielle 3 sont synchrones ;
- $\vartheta e$ désigne le retard d'émission des données inertielles de mesure R vers le calculateur de bord 5 du mobile (i.e. retard correspondant au délai entre la réalisation des mesures par la centrale inertielle 3 et leur envoi au calculateur de bord 5 du mobile) ;
- $\vartheta p$ désigne le retard de prélèvement des données cinématiques D réellement exécutées par le simulateur de mouvements 2 (i.e. retard correspondant au délai entre le prélèvement des données cinématiques D et leur mise à disposition du modèle théorique M1) ; et
- une période d'horloge Te est nécessaire pour mettre à disposition du calculateur de bord 5 les données inertielles théoriques T1 calculées par le modèle théorique M1, avance de phase comprise (cf. étapes E90 à E110);

l'avance de phase τ devant être appliquée par les moyens C2 est définie par :

$$\tau = Te + \vartheta e - \vartheta p.$$

Pour déterminer le chevelu de trajectoires de références utilisé au cours de la phase de validation de la centrale inertielle 3, on utilise, de façon connue, un simulateur entièrement numérique permettant de dérouler la trajectoire d'un mobile dans un environnement réel de navigation, en prenant en compte les différentes tolérances de la centrale inertielle 3 (ces différentes tolérances sont classiquement spécifiées par le constructeur de la centrale inertielle pour différentes caractéristiques de cette centrale inertielle comme par exemple les biais, les facteurs d'échelle, les balourds).

Ce simulateur numérique comprend, à cette fin, une modélisation de tous les équipements réels d'un mobile (notamment le calculateur de bord, la centrale inertielle, etc.) ainsi que de son environnement. Par souci de simplification, il pourra s'agir notamment du simulateur M2 utilisé au cours du procédé de validation selon l'invention, et dans lequel le calculateur de bord aura par ailleurs été modélisé.

Pour déterminer le chevelu de trajectoires, on déroule plusieurs trajectoires à l'aide du simulateur numérique en modulant les différentes caractéristiques de la centrale inertielle dans leurs tolérances respectives, sauf pour le traitement de la contribution accélérométrique liée aux déplacements linéaires, pour lequel les caractéristiques de la centrale inertielle sont maintenues au nominal, de façon à être cohérent de la mise en oeuvre appliquée en simulation hybride. L'ensemble des trajectoires ainsi obtenues constitue le chevelu des trajectoires de référence.

*Phase d'initialisation*

Comme décrit précédemment, la simulation hybride mise en oeuvre par le système de validation 1 peut également comporter en préliminaire de la phase de pilotage, une phase dite d'initialisation, durant laquelle le mobile n'est pas piloté par le calculateur de bord 5. Autrement dit, le calculateur de bord 5 génère des commandes de pilotage P, mais celles-ci ne sont pas prises en compte pour le pilotage du mobile.

Cette phase d'initialisation peut démarrer notamment dès la mise sous tension des éléments du système de validation 1 (c'est-à-dire au lancement de la simulation hybride) et durer tant que les conditions nécessaires ne sont pas réunies pour que le mobile puisse entrer en phase de pilotage. De telles conditions peuvent être prédéterminées, et consistent par exemple à s'assurer que la vitesse du mobile est supérieure à un certain seuil, etc.

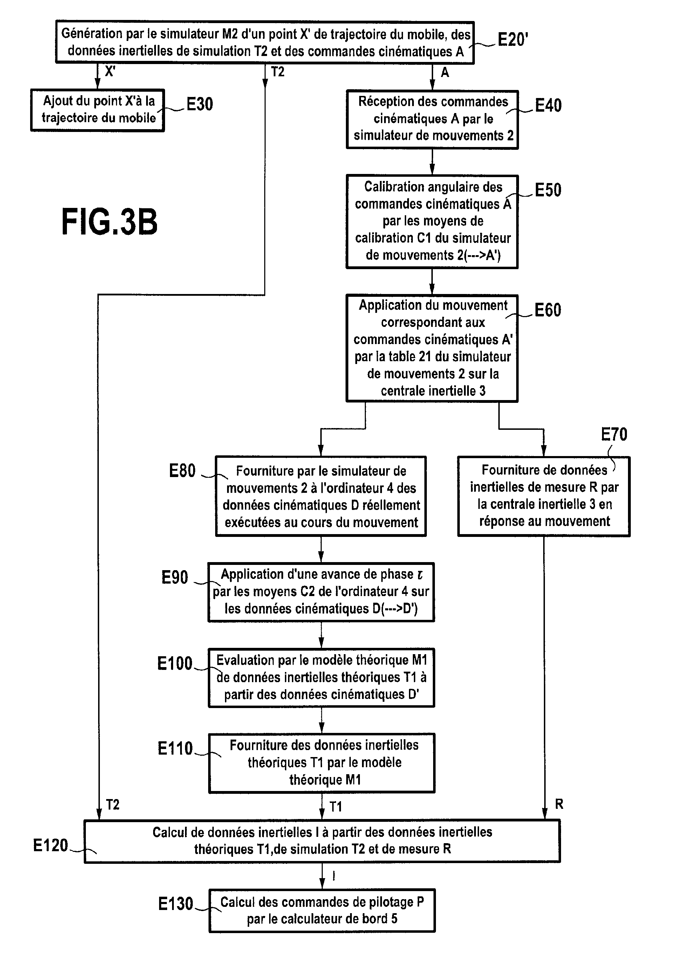

De façon similaire à la phase de pilotage, la phase d'initialisation comporte une pluralité d'itérations exécutées par les éléments du système de validation 1, en temps réel et en boucle ouverte, le déroulement de chacune de ces itérations étant représenté sur la **figure 3B.**

Les itérations mises en oeuvre au cours de la phase d'initialisation diffèrent des itérations mises en oeuvre au cours de la phase de pilotage par le fait que les commandes de pilotage P générées par le calculateur de bord 5 ne sont pas envoyées à l'outil de simulation M2 (pour cette raison, la flèche indiquant l'envoi des commandes de pilotage vers l'outil de simulation M2 est représenté en pointillés sur la figure 1).

De ce fait, au cours de l'étape E20', pendant la phase d'initialisation, l'outil de simulation M2 génère un point X' de la trajectoire du mobile, les données inertielles de simulation T2 et les commandes cinématiques A sans utiliser de commandes de pilotage générées par le calculateur de bord 5 du mobile, mais en fonction d'éventuels mouvements simulés du mobile sur son pas de tir ou lors de son déplacement autonome.

Les étapes E30 à E130 mises en oeuvre pendant la phase d'initialisation sont similaires aux étapes E30 à E130 décrites précédemment en référence à la figure 3A pour la phase de pilotage.

En particulier au cours de l'étape E130, le calculateur de bord 5 du mobile prend en compte les données inertielles I=T2+R-T1 pour effectuer sa localisation et préparer le guidage et le pilotage du mobile.

Les paramètres utilisés lors de la phase d'initialisation (à savoir les biais angulaires $\alpha R$, $\alpha T$ et $\alpha L$ et l'avance de phase $\tau$) sont les mêmes que ceux utilisés pendant la phase de pilotage et évalués au cours de la phase de paramétrage.

Dans le cas où une phase d'initialisation est mise en oeuvre, on considère comme trajectoire calculée du mobile la trajectoire formée d'une part par les points X' évalués au cours de la phase d'initialisation et d'autre part par les points X évalués au cours de la phase de pilotage. Les trajectoires de référence considérées dans la phase de validation refléteront également dans ce cas, bien entendu, ces deux phases. La validation de la centrale inertielle et le diagnostic pourront porter sur tout ou partie de la trajectoire (ex. sur la partie de la trajectoire correspondant à la phase de pilotage uniquement, ou sur la trajectoire « complète » formées au cours des deux phases, etc.).

Deuxième mode de réalisation de l'invention

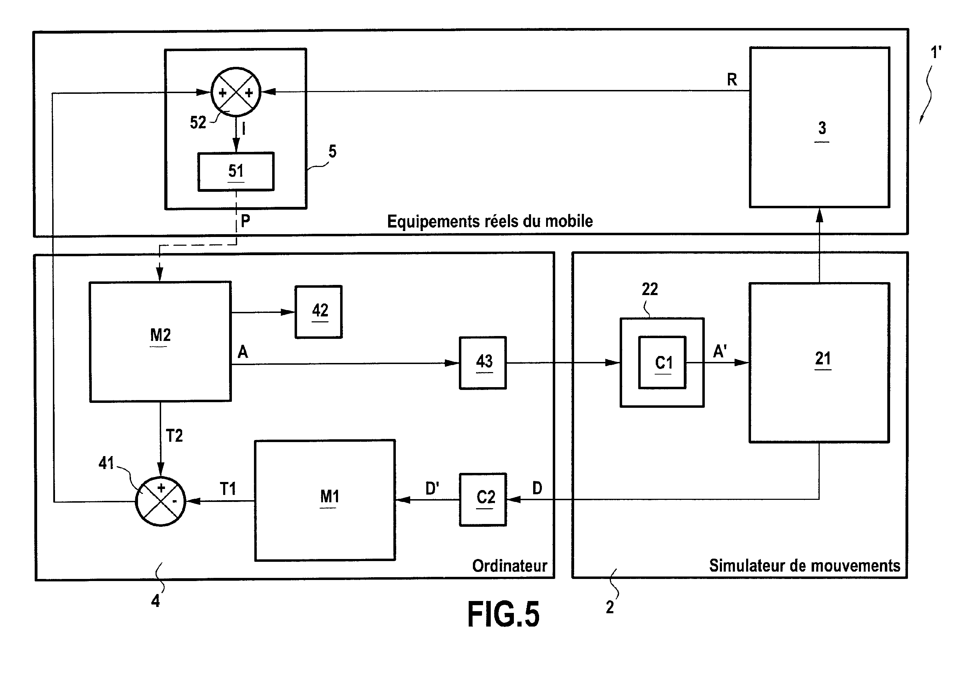

Nous allons maintenant décrire, en référence à la **figure 5,** un deuxième mode de réalisation de l'invention, dans lequel le système de validation (référencé par 1') comporte en outre des moyens 43 d'application d'une avance de phase $\phi$ sur les commandes cinématiques A générées par le simulateur M2 avant leur fourniture au simulateur de mouvements 2. Ces moyens 43 sont compris ici dans l'ordinateur 4.

Les autres éléments du système de validation 1', ainsi que leur fonctionnement, sont similaires à ceux compris dans le système de validation 1 décrit précédemment pour le premier mode de réalisation et comportant les mêmes références (cf. figures 1, 2, 3A, 3B et 4).

L'avance de phase $\phi$ est appliquée par les moyens 43, à chaque itération, sur les commandes cinématiques A à l'aide d'un algorithme connu, approprié, non détaillé ici (par exemple à l'aide d'un algorithme similaire à l'algorithme utilisé par les moyens de compensation C2 décrit précédemment). Cet algorithme veillera à ne pas introduire de distorsions sur les amplitudes des commandes cinématiques, i.e., de sorte à garantir que les amplitudes des commandes cinématiques A et des données cinématiques D soient cohérentes.

Cette avance de phase φ tend à compenser un retard d'exécution inhérent au simulateur de mouvements 2. Elle est choisie avantageusement pour que les commandes cinématiques A délivrées par l'outil de simulation M2 présentent un profil synchrone avec celui des données cinématiques D.

Ainsi, la stimulation de la centrale inertielle 3 sera synchrone de la cinématique angulaire du mobile, garantissant la représentativité de la mise en oeuvre de la centrale inertielle 3 et des éventuels autres senseurs embarqués simultanément sur le simulateur de mouvements 2.

Troisième mode de réalisation de l'invention

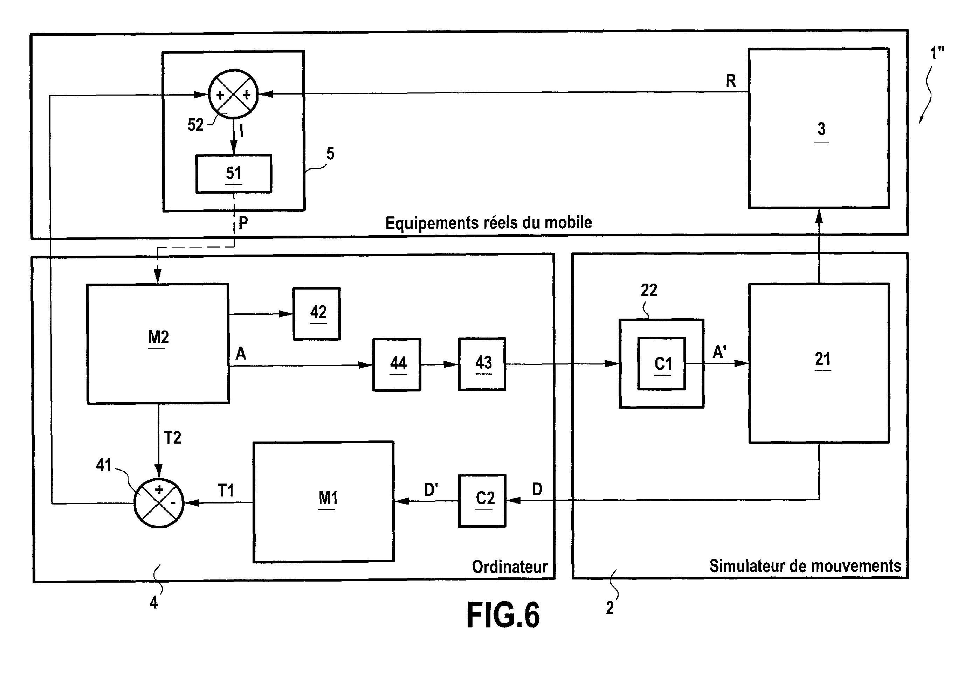

Nous allons maintenant décrire, en référence à la **figure 6,** un troisième mode de réalisation de l'invention, dans lequel le système de validation (référencé par 1") comporte en outre des moyens 44 de masquage, qui selon cet exemple sont mis en oeuvre en aval de l'outil de simulation M2 et en amont des moyens d'application d'une avance de phase 43.

Les autres éléments du système de validation 1", ainsi que leur fonctionnement, sont similaires à ceux compris dans les systèmes de validation 1 et 1' décrits précédemment pour le premier et le deuxième modes de réalisation et comportant les mêmes références (cf. figures 1, 2, 3A, 3B, 4 et 5).

Ainsi, les moyens de masquage 44 sont alimentés en temps réel, depuis l'outil de simulation M2 par les commandes cinématiques A, et fournissent des commandes cinématiques masquées aux moyens 43 pour masquer au moins une partie des phases du mouvement du mobile.

Les moyens d'application d'une avance de phase 43 fournissent alors au simulateur de mouvements 2, des commandes cinématiques qui tiennent compte des commandes cinématiques masquées pour réaliser une trajectoire pour laquelle le débattement angulaire du mobile est supérieur à celui autorisé par le simulateur de mouvements 2.

Ainsi, un déplacement angulaire du simulateur de mouvements 2 ou un arrêt de ce déplacement, piloté volontairement à partir des moyens de masquage 44, est pris en compte par les données inertielles de mesure R et les données inertielles théoriques T1 mais n'affecte pas les commandes de pilotage P. En effet, en vertu de la formule I=T2-T1+R, les données inertielles I ne sont pas affectées par tout déplacement angulaire ou arrêt du simulateur de mouvements 2 piloté par les moyens de masquage 44.

Par ailleurs, une surveillance implémentée dans les moyens de masquage 44 permet de limiter la commande de débattement angulaire avant d'atteindre les butées matérielles ou logicielles du simulateur de mouvements 2.

On notera que le modèle théorique M1, le simulateur M2, les moyens d'application d'une avance de phase 43, et les moyens masquage 44 peuvent être compris dans l'ordinateur 4 de la figure 6.

Pour illustrer un exemple d'application du système de validation 1", on considère, en référence à la **figure 7**, le déroulement d'une trajectoire d'un mobile autour d'un obstacle.

En utilisant un simulateur de mouvements 2 sous-dimensionné ayant une capacité de déplacement angulaire autour de l'axe de lacet de +/- 100 degrés (ce qui correspond à une excursion angulaire de 200 degrés), on peut dérouler une trajectoire présentant une excursion angulaire de 270 degrés. Ainsi, selon cet exemple, le mobile 71 peut parcourir une trajectoire 72 depuis un point de départ 73 jusqu'à un point d'arrivée 74 en contournant un obstacle 75 selon une excursion angulaire de 270 degrés.

En effet, au cours du déroulement de la trajectoire 72, on peut modifier le positionnement angulaire d'un axe du simulateur de mouvements 2. Par exemple, on peut piloter l'axe de lacet A3 du simulateur de mouvements 2 de manière indépendante du lacet du mobile 71.

Avantageusement, au moins une partie des commandes cinématiques masquées peuvent dépendre d'une loi interne aux moyens de masquage 44. En particulier, la loi interne est indépendante des commandes cinématiques A. Ainsi, on peut injecter dans le simulateur de mouvements 2, une commande de mouvement à partir des moyens de masquage 44, indépendante des commandes cinématiques A depuis l'outil de simulation M2. Ceci permet de dérouler une trajectoire dans laquelle le mobile 71 peut réaliser plusieurs boucles avec un simulateur de mouvements 2 présentant un débattement angulaire limité.

Par ailleurs, la trajectoire peut présenter une dynamique supérieure à celle autorisée par le simulateur de mouvements 2.

A titre d'exemple, dans le cas où, pour un événement transitoire, les commandes cinématiques A comportent une commande de vitesse supérieure à ce qu'est capable de générer le simulateur de mouvements 2, les caractéristiques des données cinématiques D réellement exécutées par le simulateur de mouvements 2 sont minorées par rapport aux commandes cinématiques A. Ainsi, ce mouvement altéré est pris en compte par les données inertielles de mesure R et les données inertielles théoriques T1. Toutefois, en vertu par exemple, de la formule I=T2-T1+R, les données inertielles I ne sont pas affectées par l'altération du mouvement. Ainsi, la trajectoire n'est pas affectée par le sous-dimensionnement du simulateur de mouvements 2.

L'invention vise aussi un programme d'ordinateur téléchargeable depuis un réseau de communication comprenant des instructions de codes de programme pour l'exécution d'étapes du système de validation selon l'invention lorsqu'elles sont exécutées sur l'ordinateur 4. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quel dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

**Revendications**

1. Procédé de validation d'une centrale inertielle (3) d'un mobile embarquée sur un simulateur (2) de mouvements angulaires, ledit simulateur de mouvements étant localisé en un point de coordonnées fixes du référentiel terrestre, ladite validation (F10) étant mise en oeuvre en comparant une trajectoire dudit mobile calculée dans un environnement réel de navigation avec au moins une trajectoire de référence,

   ledit procédé comportant, pour obtenir ladite trajectoire calculée, une phase de pilotage dudit mobile comprenant une pluralité d'itérations, chacune desdites itérations comprenant :

   - une étape d'obtention (E20) à l'aide d'un outil de simulation (M2) modélisant ladite centrale inertielle dans ledit environnement réel de navigation et alimenté par des commandes de pilotage (P) calculées à l'itération précédente :

      o d'un point (X) de ladite trajectoire calculée dudit mobile ;
      o de données inertielles de simulation (T2) représentatives des données inertielles censées être fournies par ladite centrale inertielle dans ledit environnement réel de navigation ; et
      o de commandes cinématiques (A) représentatives d'un mouvement à exécuter par ledit simulateur de mouvements ;

   - une étape de fourniture (E70) par ladite centrale inertielle (3) de données inertielles de mesure (R) représentatives dudit mouvement après exécution par ledit simulateur de mouvements (2) ;
   - une étape de modélisation théorique (E100) desdites données inertielles de mesure fournies par ladite centrale inertielle, à partir de données cinématiques (D') réellement exécutées par ledit simulateur de mouvement pour ledit mouvement, ladite étape de modélisation théorique fournissant des données inertielles théoriques (T1) ;
   - au moins une étape de compensation (E50, E90) d'au moins une erreur susceptible de fausser ladite modélisation théorique desdites données inertielles de mesure par lesdites données inertielles théoriques, ladite au moins une étape de compensation (E50, E90) étant mise en oeuvre avant ladite étape de modélisation théorique (E100) ; et
   - une étape de calcul (E130) de commandes de pilotage (P) à partir desdites données inertielles de simulation (T2), desdites données inertielles théoriques (T1) et desdites données inertielles de mesure (R).

2. Procédé de validation selon la revendication 1 dans lequel chaque itération est mise en oeuvre en temps réel à un rythme d'horloge conditionné par le rythme d'horloge dudit mobile.

3. Procédé selon la revendication 1 ou 2 **caractérisé en ce que** ladite au moins une étape de compensation d'au moins une erreur comprend une calibration (E50) d'au moins une desdites commandes cinématiques (A) afin de compenser les écarts angulaires existant entre des axes dudit simulateur de mouvements (2) et les axes correspondant dudit référentiel terrestre.

4. Procédé selon l'une quelconque des revendications 1 à 3 **caractérisé en ce que** ladite au moins une étape de compensation d'au moins une erreur comprend l'application d'une avance de phase (E90) sur au moins une desdites données cinématiques (D) réellement exécutées par ledit simulateur de mouvements (2) avant leur fourniture à ladite étape de modélisation théorique (E100), afin de synchroniser lesdites données inertielles théoriques (T1) avec lesdites données inertielles de mesure (R).

5. Procédé selon l'une quelconque des revendications 1 à 4, **caractérisé en ce que** lesdites commandes de pilotage (P) sont calculées en fonction de données inertielles I définies par I=T2+R-T1 où T2, R et T1 désignent respectivement lesdites données inertielles de simulation, lesdites données inertielles de mesure et lesdites données inertielles théoriques.

**6.** Procédé selon la revendication 5 **caractérisé en ce que,** lorsque ladite centrale inertielle (3) est considérée comme non valide (F30) à l'issue de ladite validation (F10), ledit procédé comporte en outre une étape de diagnostic (F40) mise en oeuvre en comparant des cumuls évalués à partir desdites données inertielles de mesure (R) obtenues à chaque itération pour ladite trajectoire dudit mobile avec des cumuls évalués à partir desdites données inertielles théoriques (T1) obtenues à chaque itération pour ladite trajectoire dudit mobile.

**7.** Procédé selon l'une quelconque des revendications 1 à 6 comprenant en outre au cours de chaque itération, une étape d'application d'une avance de phase sur lesdites commandes cinématiques (A) avant leur fourniture audit simulateur de mouvements (2) pour compenser un retard d'exécution inhérent audit simulateur de mouvements (2).

**8.** Procédé selon la revendication 7 dans lequel lesdites commandes cinématiques (A) présentent un profil synchrone avec celui desdites données cinématiques (D) réellement exécutées et les amplitudes desdites données cinématiques réellement exécutées (D) et desdites commandes cinématiques (A) sont cohérentes.

**9.** Procédé selon la revendication 8 comportant en outre, à chaque itération, une étape de masquage après ladite étape d'obtention (E20) et avant ladite étape d'application d'une avance de phase sur lesdites commandes cinématiques (A) de sorte que ladite étape de masquage est alimentée par lesdites commandes cinématiques (A) et fournit des commandes cinématiques masquées à ladite étape d'application d'une avance de phase sur lesdites commandes cinématiques pour masquer au moins une partie des phases dudit mouvement.

**10.** Procédé selon la revendication 9 dans lequel au moins une partie desdites commandes cinématiques masquées dépend d'une loi interne à l'étape de masquage qui est indépendante desdites commandes cinématiques.

**11.** Procédé selon l'une quelconque des revendications 1 à 10 comprenant en outre une phase d'initialisation comportant une pluralité d'itérations, chaque itération de ladite phase d'initialisation comprenant :

- une étape d'obtention (E20') à l'aide dudit outil de simulation (M2) :

o d'un point de ladite trajectoire (X') calculée dudit mobile ;
o de données inertielles de simulation (T2) représentatives des données inertielles censées être fournies par ladite centrale inertielle dans ledit environnement réel de navigation ; et
o de commandes cinématiques (A) représentatives d'un mouvement à exécuter par ledit simulateur de mouvements ;

- ainsi que les étapes de fourniture (E70) de données inertielles de mesure, de modélisation théorique (E100), de compensation (E50,E90) et de calcul (E130) de ladite phase de pilotage du procédé de validation selon l'une quelconque des revendications 1 à 10.

**12.** Système de validation (1,1',1") d'une centrale inertielle (3) d'un mobile embarquée sur un simulateur de mouvements angulaires (2), ledit simulateur de mouvements étant localisé en un point de coordonnées fixes du référentiel terrestre, ledit système comprenant pour valider ladite centrale inertielle des moyens de comparaison (42) d'une trajectoire dudit mobile calculée dans un environnement réel de navigation avec au moins une trajectoire de référence, ledit système comportant en outre, pour obtenir ladite trajectoire calculée, des moyens pour mettre en oeuvre au cours de chaque itération d'une phase de pilotage comprenant une pluralité d'itérations :

- un outil de simulation (M2), modélisant ladite centrale inertielle dans ledit environnement réel de navigation et alimenté par des commandes de pilotage (P) calculées à l'itération précédente, ledit outil de simulation comprenant des moyens pour obtenir :

o un point (X) de ladite trajectoire calculée dudit mobile ;
o des données inertielles de simulation (T2) représentatives des données inertielles censées être fournies par ladite centrale inertielle dans ledit environnement réel de navigation ; et
o des commandes cinématiques (A) représentatives d'un mouvement à exécuter par ledit simulateur de mouvements (2) ;

- des moyens (3) d'obtention de données inertielles de mesure fournies par ladite centrale inertielle et représentatives dudit mouvement après exécution par ledit simulateur de mouvements (2) ;
- des moyens de modélisation théorique (M1) desdites données inertielles de mesure fournies par ladite centrale inertielle à partir de données cinématiques (D') réellement exécutées par ledit simulateur de mouvement (2) pour ledit mouvement, lesdits moyens de modélisation théorique fournissant des données inertielles théoriques (T1) ;

- des moyens de compensation (C1,C2) d'au moins une erreur susceptible de fausser ladite modélisation théorique desdites données inertielles de mesure (R) par lesdites données inertielles théoriques (T1), lesdits moyens de compensation (C1,C2) étant mis en oeuvre en amont desdits moyens de modélisation théorique (M1) ; et

- des moyens de calcul (5) de commandes de pilotage à partir desdites données inertielles de simulation (T2), desdites données inertielles théoriques (T1) et desdites données inertielles de mesure (R).

13. Système de validation (1,1',1") selon la revendication 12 dans lequel ledit outil de simulation (M2), ladite centrale inertielle (3), lesdits moyens de modélisation théorique (M1), lesdits moyens de compensation (C1,C2) et lesdits moyens de calcul (5) fonctionnent en temps réel à un rythme d'horloge conditionné par le rythme d'horloge dudit mobile.

14. Système de validation (1,1',1") selon la revendication 12 ou 13 dans lequel lesdits moyens de compensation comprennent des moyens de calibration (C1) d'au moins une desdites commandes cinématiques (A) afin de compenser des écarts angulaires existant entre des axes dudit simulateur de mouvements (2) et les axes correspondant dudit référentiel terrestre.

15. Système de validation (1,1',1") selon l'une quelconque des revendications 12 à 14 dans lequel lesdits moyens de compensation comprennent des moyens d'application (C2) d'une avance de phase sur au moins une desdites données cinématiques (D) réellement exécutées par ledit simulateur de mouvements (2) avant leur fourniture auxdits moyens de modélisation théorique (M1), afin de synchroniser lesdites données inertielles théoriques (T1) avec lesdites données inertielles de mesure (R).

16. Système de validation (1,1',1") selon l'une quelconque des revendications 12 à 15, dans lequel lesdits moyens de calculs (5) calculent lesdites commandes de pilotage (P) en fonction de données inertielles I définies par I=T2+R-T1 où T2, R et T1 désignent respectivement lesdites données inertielles de simulation, lesdites données inertielles de mesure et lesdites données inertielles théoriques.

17. Système de validation (1,1',1") selon la revendication 16 comportant des moyens de diagnostic (42), lorsque ladite centrale inertielle (3) est considérée comme non valide par ledit système de validation (1,1',1"), adaptés à comparer des cumuls évalués à partir desdites données inertielles de mesure obtenues à chaque itération pour ladite trajectoire dudit mobile avec des cumuls évalués à partir de données inertielles théoriques obtenues à chaque itération pour ladite trajectoire dudit mobile.

18. Système de validation (1,1',1") selon l'une quelconque des revendications 12 à 17 comprenant en outre des moyens (43) pour appliquer une avance de phase sur lesdites commandes cinématiques (A) avant leur fourniture audit simulateur de mouvements (2) pour compenser un retard d'exécution inhérent audit simulateur de mouvements (2).

19. Système de validation (1,1',1") selon la revendication 18 dans lequel lesdites commandes cinématiques A présentent un profil synchrone avec celui desdites données cinématiques D réellement exécutées et les amplitudes desdites données cinématiques D réellement exécutées et desdites commandes cinématiques A sont cohérentes.

20. Système de validation (1,1',1") selon la revendication 19 comportant en outre en aval dudit outil de simulation et en amont desdits moyens (43) d'application d'une avance de phase sur lesdites commandes cinématiques, des moyens de masquage (44) alimentés par lesdites commandes cinématiques (A) et adaptés à fournir des commandes cinématiques masquées auxdits moyens d'application (43) d'une avance de phase sur lesdites commandes cinématiques (A) pour masquer au moins une partie des phases dudit mouvement.

21. Système de validation selon la revendication 20 dans lequel au moins une partie desdites commandes cinématiques masquées dépend d'une loi interne auxdits moyens de masquage qui est indépendante desdites commandes cinématiques (A).

FIG.1

A2

3

A1

21

**FIG.2**

A3

71

72

75

74

73

**FIG.7**

**E10** — Réception par le simulateur M2 des commandes de pilotage P

P

**E20**

Génération par le simulateur M2 d'un point X de trajectoire du mobile, des données inertielles de simulation T2 et des commandes cinématiques A à partir des commandes de pilotage P

X

T2

A

Ajout du point X à la trajectoire du mobile — **E30**

Réception des commandes cinématiques A par le simulateur de mouvements 2 — **E40**

## FIG.3A

Calibration angulaire des commandes cinématiques A par les moyens de calibration C1 du simulateur de mouvements 2(--->A') — **E50**

Application du mouvement correspondant aux commandes cinématiques A' par la table 21 du simulateur de mouvements 2 sur la centrale inertielle 3 — **E60**

**E70**

**E80** — Fourniture par le simulateur de mouvements 2 à l'ordinateur 4 des données cinématiques D réellement exécutées au cours du mouvement

Fourniture de données inertielles de mesure R par la centrale inertielle 3 en réponse au mouvement

**E90** — Application d'une avance de phase τ par les moyens C2 de l'ordinateur 4 sur les données cinématiques D(--->D')

**E100** — Evaluation par le modèle théorique M1 de données inertielles théoriques T1 à partir des données cinématiques D'

**E110** — Fourniture des données inertielles théoriques T1 par le modèle théorique M1

T2

T1

R

**E120** — Calcul de données inertielles I à partir des données inertielles théoriques T1,de simulation T2 et de mesure R

I

**E130** — Calcul des commandes de pilotage P par le calculateur de bord 5

P

Génération par le simulateur M2 d'un point X' de trajectoire du mobile, des
données inertielles de simulation T2 et des commandes cinématiques A — E20'

| X' | T2 | A |

Ajout du point X'à la
trajectoire du mobile — E30

Réception des commandes
cinématiques A par le
simulateur de mouvements 2 — E40

## FIG.3B

Calibration angulaire des
commandes cinématiques A
par les moyens de
calibration C1 du simulateur
de mouvements 2(--->A') — E50

Application du mouvement
correspondant aux
commandes cinématiques A'
par la table 21 du simulateur
de mouvements 2 sur la
centrale inertielle 3 — E60

E70

E80 — Fourniture par le simulateur de
mouvements 2 à l'ordinateur 4 des
données cinématiques D réellement
exécutées au cours du mouvement

Fourniture de données
inertielles de mesure R par
la centrale inertielle 3 en
réponse au mouvement

E90 — Application d'une avance de phase τ
par les moyens C2 de l'ordinateur 4 sur
les données cinématiques D(--->D')

E100 — Evaluation par le modèle théorique M1
de données inertielles théoriques T1 à
partir des données cinématiques D'

E110 — Fourniture des données inertielles
théoriques T1 par le modèle
théorique M1

| T2 | T1 | R |

E120 — Calcul de données inertielles I à partir des données inertielles
théoriques T1,de simulation T2 et de mesure R

I

E130 — Calcul des commandes de pilotage P
par le calculateur de bord 5

**FIG.4**

Trajectoire
du mobile élaboré par le
système de validation 1

La trajectoire
du mobile se trouve-t-elle dans
l'enveloppe du chevelu de trajectoires
de référence ? — F10

OUI

NON

F30 — La centrale inertielle
3 n'est pas valide

La centrale inertielle
3 est valide — F20

Obtention de courbes de cumuls pour
les données inertielles théoriques T1
et de mesure R, pour les 3 axes — F41

Comparaison, pour chaque donnée inertielle
(R,T1) et chaque axe, d'un différentiel des
cumuls par rapport à une enveloppe de tolérance — F42

Identification
des défauts de la
centrale inertielle 3 — F43

F40

22

FIG.5

FIG.6

Europäisches
Patentamt

European
Patent Office

Office européen
des brevets

**RAPPORT DE RECHERCHE EUROPEENNE**

Numéro de la demande

EP 09 15 2280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| L,P,X | EP 1 909 067 A (MBDA FRANCE [FR]) 9 avril 2008 (2008-04-09) <br><br> * pages 2,3, alinéa 13 * <br> * page 5, alinéa 42 - page 6, alinéa 54 * <br> * page 6, alinéa 62 - page 7, alinéa 71 * <br> * page 7, alinéas 74,76-78 * <br> * figures 1-5 * <br> ----- | 1,2, 5-13, 16-21 | INV. G01C25/00 G01P21/00 |
| A | US 6 298 318 B1 (LIN CHING-FANG [US]) 2 octobre 2001 (2001-10-02) <br> * colonne 3, ligne 14 - colonne 4, ligne 56 * <br> * colonne 7, ligne 8 - ligne 37 * <br> * colonne 9, ligne 8 - ligne 43 * <br> * figures 1,2 * <br> ----- | 1-21 | |
| A | US 3 782 167 A (STUELPNAGEL J) 1 janvier 1974 (1974-01-01) <br> * le document en entier * <br> ----- | 1-21 | |
| A | US 5 922 041 A (ANDERSON ERIC G [US]) 13 juillet 1999 (1999-07-13) <br> * le document en entier * <br> ----- | 1-21 | DOMAINES TECHNIQUES RECHERCHES (IPC) <br><br> G01C G01P |

Le présent rapport a été établi pour toutes les revendications

| Lieu de la recherche | Date d'achèvement de la recherche | Examinateur |
|---|---|---|
| La Haye | 27 mai 2009 | Yosri, Samir |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 2280

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2009

| Document brevet cité au rapport de recherche | | Date de publication | Membre(s) de la famille de brevet(s) | | Date de publication |
|---|---|---|---|---|---|
| EP 1909067 | A | 09-04-2008 | FR<br>WO | 2906881 A1<br>2008040917 A2 | 11-04-2008<br>10-04-2008 |
| US 6298318 | B1 | 02-10-2001 | TW | 434525 B | 16-05-2001 |
| US 3782167 | A | 01-01-1974 | DE<br>FR<br>GB<br>JP | 2254013 A1<br>2158568 A1<br>1344404 A<br>48057399 A | 10-05-1973<br>15-06-1973<br>23-01-1974<br>11-08-1973 |
| US 5922041 | A | 13-07-1999 | AUCUN | | |

EPO FORM P0460

Pour tout renseignement concernant cette annexe : voir Journal Officiel de l'Office européen des brevets, No.12/82